# EUROPEAN PATENT APPLICATION

(11) **EP 4 344 245 A1**
(43) Date of publication of application: **27.03.2024**
(21) Application number: 23750524.3
(22) Date of filing: 05.07.2023
(51) Int. Cl.: H04R 1/10, H02J 7/00, H04R 3/00

(54) **ELECTRONIC DEVICE AND CHARGING DEVICE CONNECTED TO SAME**

(30) Priority: 08.08.2022 KR 20220098699
(71) Applicant: Samsung Electronics Co., Ltd., Suwon-si, Gyeonggi-do 16677 (KR)
(72) Inventor: LEE, Jaesung, Suwon-si, Gyeonggi-do 16677 (KR); KIM, Donghyeon, Suwon-si, Gyeonggi-do 16677 (KR); KIM, Sanghyeok, Suwon-si, Gyeonggi-do 16677 (KR); WOO, Taehyun, Suwon-si, Gyeonggi-do 16677 (KR); LEE, Seungho, Suwon-si, Gyeonggi-do 16677 (KR)
(74) Representative: HGF
(86) International application number: PCT/KR2023/009506
(87) International publication number: WO 2024/034862

(57) **Abstract**

An electronic device and a charging device connected to the electronic device are provided. The electronic device includes a plurality of units, wherein each of the plurality of units includes a battery, a processor, a communication module configured to establish a connection for communication with a user terminal, and a memory electrically connected to the processor and configured to store instructions executable by the processor, wherein, when the instructions are executed, the processor is configured to share state information of the battery with another unit, determine a unit to perform a preset operation mode among the plurality of units based on the state information of the battery, and control the determined unit to perform the operation mode.

## Description

### BACKGROUND

### 1. Field

The disclosure relates to an electronic device including a plurality of units for determining a unit to perform a set operation based on a state of a battery and a charging device connected to the electronic device.

### 2. Description of Related Art

In an electronic device including a plurality of units (or modules, sub-units, apparatus, sub-systems etc.), such as wireless earphones, each unit may include a battery or other power supply. The battery usage of each of the plurality of units may vary, and when a particular unit uses a lot of battery or has a long usage time, the lifespan of the battery included in that unit may be shortened.

When the lifespan of the battery of the particular unit is shortened, even if the plurality of units is fully charged, the battery in that particular unit may be discharged first.

For lithium-ion batteries used in electronic devices, the battery lifespan may be shortened due to factors such as the number of charging/discharging cycles, aging, and cumulative usage of a battery.

### SUMMARY

According to an embodiment, an electronic device may include a plurality of units including a first unit and at least one second unit. Each of the plurality of units may include a battery, a processor, a communication module or a memory electrically connected to the processor and configured to store instructions executable by the processor, or a combination thereof. The instructions may be executed by the processor of the first unit, cause the first unit to receive, from each one of the at least one second unit, state information of the battery of the respective one of the at least one second unit. The instructions may cause the first unit to determine a unit to perform an operation mode among the plurality of units based on the received state information and state information of the battery of the first unit. The instructions may cause the first unit to control the determined unit to perform the operation mode.

According to an embodiment, an electronic device may include a plurality of units including a first unit and at least one second unit. Each of the plurality of units may include a battery, a communication module configured to establish a communication connection with a charging device, a processor configured to transmit state information of the battery to the charging device or a memory electrically connected to the processor and configured to store instructions executable by the processor, or a combination thereof. The instructions may be executed by the processor of the first unit, cause the first unit to control the first unit to perform an operation mode based on receiving a control signal from the charging device. The first unit may be configured to connect to the charging device and/or the state information of the battery of the first unit bay be different to the state information of the battery of the at least one second unit.

According to an embodiment, a charging device may include a power source configured to supply power to a plurality of units, a communication module configured to establish a communication connection with the plurality of units, a processor or a memory electrically connected to the processor and configured to store instructions executable by the processor, or a combination thereof. The instructions may be executed by the processor cause the charging device to receive, from each one of the plurality of units, state information of a battery of the respective one of the plurality of units. The instructions may cause the charging device to determine a unit to perform an operation mode among the plurality of units, based on at least one of the state information or the unit being connected to the charging device. The instructions may cause charging device to transmit a control signal for performing the operation mode to the determined unit.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram illustrating an electronic device in a network environment according to an embodiment;
FIG. 2 is a block diagram of a power management module and a battery according to an embodiment;
FIG. 3 is a schematic block diagram of an electronic device according to an embodiment;
FIG. 4 is a schematic block diagram of an electronic device and a charging device according to an embodiment;
FIG. 5 is a diagram illustrating an operation of an electronic device to determine a unit to perform an operation mode and perform the operation mode according to an embodiment;
FIG. 6 is a diagram illustrating an operation of an electronic device to determine a unit to perform an operation mode depending on a number of units combined with a charging device according to an embodiment;
FIG. 7 is a diagram illustrating an operation of an electronic device combined with a charging device to perform an operation mode according to an embodiment;
FIG. 8 is a diagram illustrating an operation of a charging device to determine a unit to perform an operation mode and perform the operation mode according to an embodiment; and
FIG. 9 is a diagram illustrating an operation of a charging device to determine a unit to perform an operation mode depending on a number of units combined with the charging device according to an embodiment.

### DETAILED DESCRIPTION

Hereinafter, embodiments will be described in detail with reference to the accompanying drawings. When describing the embodiments with reference to the accompanying drawings, like reference numerals refer to like elements and a repeated description related thereto will be omitted.

As used herein, "A or B", "at least one of A and B", "at least one of A or B", "A, B or C", "at least one of A, B and C", "A, B and/or C", and "at least one of A, B, or C," may each include any one of the items listed together in the corresponding one of the phrases, or all possible combinations thereof.

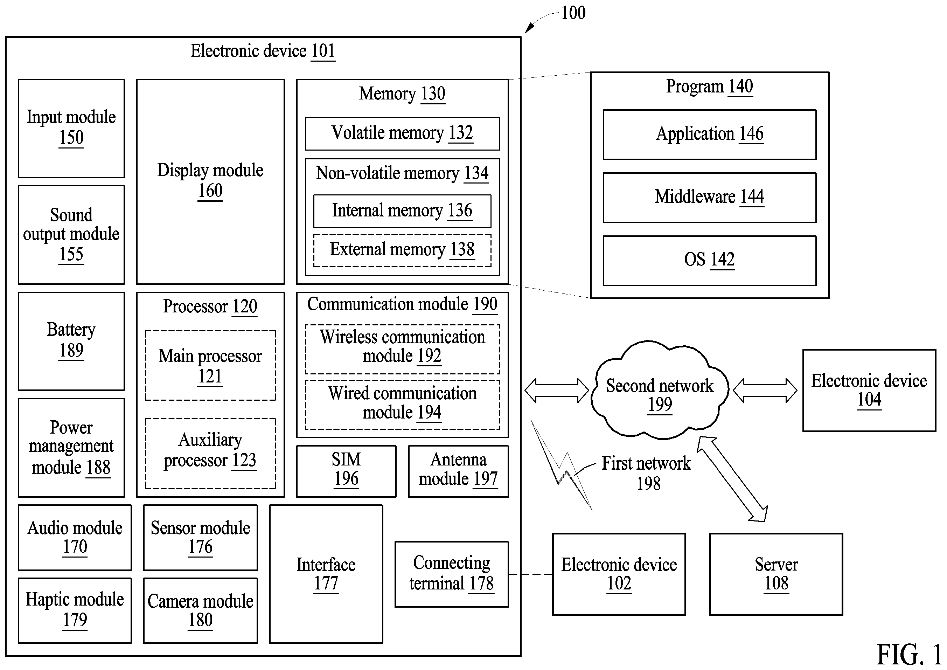

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a portion of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence model processing. An artificial intelligence model may be generated by machine learning. Such learning may be performed by, for example, the electronic device 101 in which an artificial intelligence model is executed, or performed via a separate server (e.g., the server 108). Learning algorithms may include, but are not limited to, for example, supervised learning, unsupervised learning, semi-supervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The artificial intelligence model may additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electrical signal or vice versa. According to an embodiment, the audio module 170 may obtain the sound via the input module 150 or output the sound via the sound output module 155 or an external electronic device (e.g., the electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., a mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101. According to an embodiment, all or some of operations to be executed by the electronic device 101 may be executed at one or more external electronic devices (e.g., the external electronic devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or MEC. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

For example, the electronic device 101 may be wireless earbuds. The electronic device 101 may be a true wireless stereo (TWS) device and may output sound from the sound output module 155 using data received from the connected external electronic device 102. The electronic device 101 may transmit voice received from the external electronic device 102 through the input module 150.

For example, the electronic device 101 may output sound from the sound output module 155 using data received from the external electronic device 102 that is wirelessly connected or may transmit data to the external electronic device 102.

For example, the electronic device 101 may be electrically connected to the external electronic device 102 (e.g., a cradle or a wireless charger). For example, when the electronic device 101 is paired with a user terminal (not illustrated) and is electrically connected to a cradle or a wireless charger, pairing with the user terminal may be terminated and the battery 189 may be charged using power supplied from the cradle or the wireless charger.

For example, a charging device (e.g., the electronic device 102), such as a cradle or a wireless charger, may include a cover. The cover may open or close an accommodation part in which the electronic device 101 is combined with the charging device and placed depending on an operation. For example, the charging device may provide a signal to wake up the electronic device 101 to the electronic device 101 in response to an operation of the cover. For example, when the charging of the electronic device 101 is completed, the electronic device 101 and/or the charging device may be set to a sleep mode. When the cover is open, the charging device may wake up the electronic device 101.

For example, the charging device may receive a charge state of the battery 189 from the electronic device 101. The charging device may display a battery 189 charge state of the electronic device 101 or a battery charge state of the charging device using a display module (e.g., the display module 160), a lamp, and the like.

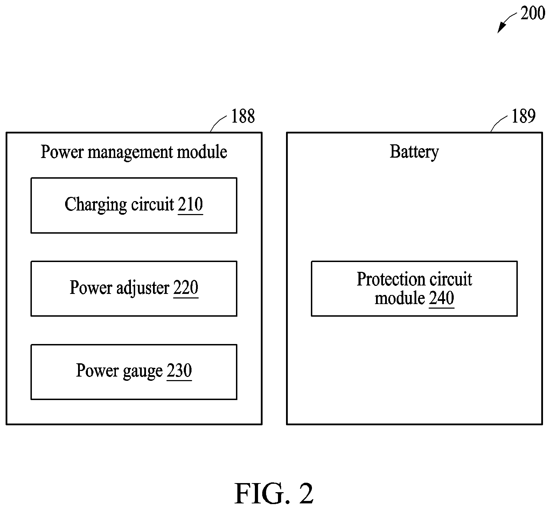

FIG. 2 is a block diagram 200 of the power management module 188 and the battery 189 according to an embodiment. Referring to FIG. 2, the power management module 188 may include a charging circuit 210, a power adjuster 220, and/or a power gauge 230. The charging circuit 210 may charge the battery 189 using power supplied from an external power source outside the electronic device 101. According to an embodiment, the charging circuit 210 may select a charging scheme (e.g., normal charging or quick (e.g. fast) charging) based at least in part on a type of the external power source (e.g., a power outlet, a USB, or wireless charging), a charging device (e.g., a cradle), magnitude of power suppliable from the external power source (e.g., about 20 Watts or more), or an attribute of the battery 189, and may charge the battery 189 using the selected charging scheme. The external power source may be connected with the electronic device 101, for example, directly via the connecting terminal 178 or wirelessly via the antenna module 197.

The power adjuster 220 may generate a plurality of powers having different voltage levels or different current levels by adjusting a voltage level (e.g. an amount of voltage, a voltage value etc.) or a current level (e.g., an amount of current, a current value etc.) of the power supplied from the external power source or the battery 189. The power adjuster 220 may adjust the voltage level or the current level of the power supplied from the external power source or the battery 189 into a different voltage level or current level appropriate for each of one or more, or some, of the components included in the electronic device 101. According to an embodiment, the power adjuster 220 may be implemented in the form of a low drop out (LDO) regulator or a switching regulator. The power gauge 230 may measure use state information about the battery 189 (e.g., a capacity, a number of times of charging or discharging, a voltage, or a temperature of the battery 189).

The power management module 188 may determine, using, for example, at least one of the charging circuit 210, the power adjuster 220, or the power gauge 230, charging state information (e.g., lifespan, over voltage, low voltage, over current, over charge, over discharge, overheat, short, or swelling) related to the charging of the battery 189 based at least in part on the measured use state information about the battery 189. The power management module 188 may determine whether the state of the battery 189 is normal or abnormal based at least in part on the determined charging state information. If the state of the battery 189 is determined to be abnormal, the power management module 188 may adjust the charging of the battery 189 (e.g., reduce the charging current or voltage, or stop the charging). According to an embodiment, at least some of the functions of the power management module 188 may be performed by an external control device (e.g., the processor 120)

According to an embodiment, the battery 189 may include a protection circuit module (PCM) 240. The PCM 240 may perform one or more of various functions (e.g., a pre-cutoff function) to prevent a performance deterioration of, or a damage to, the battery 189. The PCM 240, additionally or alternatively, may be configured as at least part of a battery management system (BMS) capable of performing various functions including cell balancing, measurement of battery capacity, count of a number of charging or discharging, measurement of temperature, or measurement of voltage.

According to an embodiment, at least part of the charging state information or use state information regarding the battery 189 may be measured using a corresponding sensor (e.g., a temperature sensor) of a sensor module 276, the power gauge 230, or the power management module 188. According to an embodiment, the corresponding sensor (e.g., the temperature sensor) of the sensor module 176 may be included as part of the PCM 140, or may be disposed near the battery 189 as a separate device.

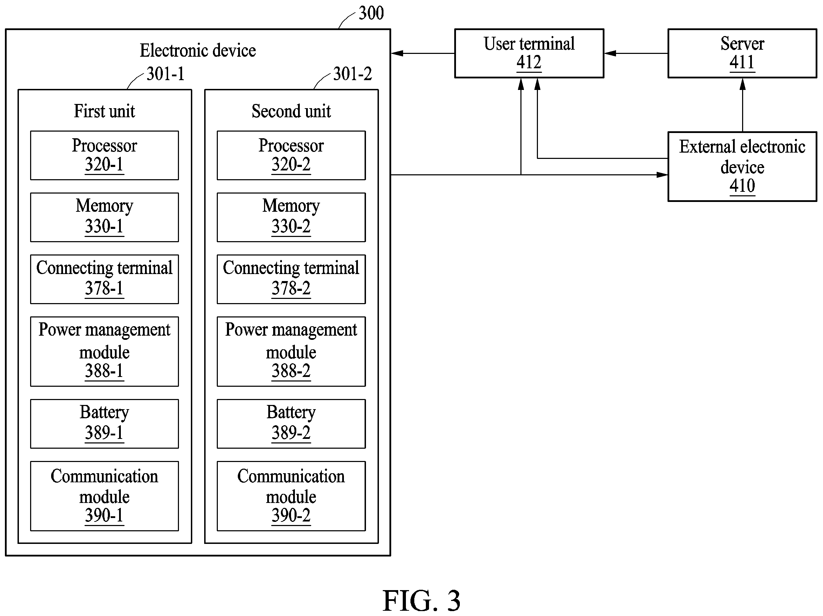

FIG. 3 is a schematic block diagram of an electronic device 300 according to an embodiment.

Referring to FIG. 3, the electronic device 300 may include a plurality of units 301-1 and 301-2.

For example, each of the plurality of units 301-1 and 301-2 may include at least one of a processor 320-1, 320-2 (e.g., the processor 120 of FIG. 1), a memory 330-1, 330-2 (e.g., the memory 130 of FIG. 1), a connecting terminal 378-1, 378-2 (e.g., the connecting terminal 178 of FIG. 1), a power management module 388-1, 388-2 (e.g., the power management module 188 of FIG. 1), a battery 389-1, 389-2 (e.g., the battery 189 of FIG. 1), or a communication module 390-1, 390-2 (e.g., the communication module 190 of FIG. 1), or a combination thereof.

For example, the processor 320-1, 320-2 may identify (or detect, determine, obtain etc.) state information of the battery 389-1, 389-2. For example, the processor 320-1 of one unit may identify state information of the battery 389-1 of that one unit, and/or the processor 320-2 of another unit may identify state information of the battery 389-2 of that other unit. For example, the state information of the battery 389-1, 389-2 may include usage state information (e.g., a capacity of the battery 389-1, 389-2, a number of charging/discharging cycles, a voltage, or a temperature). For example, the state information of the battery 389-1, 389-2 may include charging state information (e.g., lifespan, over voltage, low voltage, over current, over charge, over discharge, overheat, short, or swelling) related to charging of the battery 389-1, 389-2. It will be appreciated that the 'state information' of the battery 389-1, 389-2 may also be regarded more generally as information of (or related to) the battery 389-1, 389-2, or status information of the battery 389-1, 389-2, or context information of the battery 389-1, 389-2.

For example, the state information of the battery 389-1, 389-2 may include cumulative usage of the battery 389-1, 389-2. For example, the cumulative usage of the battery 389-1, 389-2 may refer to an accumulated time in which each unit operates using the battery 389-1, 389-2.

For example, a first unit 301-1 and a second 301-2 may be connected for communication. For example, the first unit 301-1 and the second unit 301-2 may be connected for communication wirelessly or by wire using the communication module 390-1, 390-2.

For example, the processor 320-1, 320-2 may share the state information of the battery 389-1, 389-2 with another unit. For example, the processor 320-1 of the first unit 301-1 may share the state information of the battery 389-1 with the second unit 301-2 using the communication module 390-1. For example, the processor 320-2 of the second unit 301-2 may share the state information of the battery 389-2 with the first unit 301-1 using the communication module 390-2.

For example, the first unit 301-1 or the second unit 301-2 may be connected as a master or a slave. For example, when the first unit 301-1 is set as the master, the processor 320-2 of the second unit 301-2 may transmit the state information of the battery 389-2 to the first unit 301-1.

For example, the processor 320-1, 320-2 may determine a unit to perform an operation mode. For example, the electronic device 300 may be connected to a user terminal 412 for communication wirelessly or by wire. For example, the electronic device 300 may be set to the operation mode based on an input received from the user terminal 412.

For example, the operation mode may refer to a mode in which at least one unit of the plurality of units 301-1 and 301-2 operates. For example, when the operation mode is set in the electronic device 300 in FIG. 3, one of the first unit 301-1 or the second unit 301-2 may perform a set operation, and the other one of the first unit 301-1 or the second unit 301-2 may not perform the set operation. In another example, when the operation mode is set in the electronic device 300, the first unit 301-1 and the second unit 301-2 may perform the set operation.

For example, when some or all of the plurality of units 301-1 and 301-2 perform the set operation, a unit that performs the operation may operate using the battery 389-1, 389-2. For example, when some of the plurality of units 301-1 and 301-2 perform the set operation in the operation mode, the cumulative usage of the battery 389-1, 389-2 may increase.

For example, the electronic device 300 may transmit a wireless signal for the user terminal 412, or an external electronic device 410, to identify a location of the electronic device 300 and/or the plurality of units 301-1 and 301-2 in the operation mode. For example, an external electronic device 410 may identify the location of the electronic device 300 and/or the plurality of units 301-1 and 301-2 based on the wireless signal received from the electronic device 300.

For example, the wireless signal transmitted from the electronic device 300 to the external electronic device 410 may be an advertising signal that does not include location information of the electronic device 300 and/or the plurality of units 301-1 and 301-2. Receiving the advertising signal from the electronic device 300, the external electronic device 410 may transmit location information to a server 411 based on location information of the external electronic device 410. The server 411 may provide the location information of the external electronic device 410 received from the user terminal 412 to the user terminal 412.

For example, the wireless signal transmitted from the electronic device 300 to the external electronic device 410 may include the location information of the electronic device 300 and/or the plurality of units 301-1 and 301-2. The external electronic device 410 may identify the location information and transmit the identified location information to the server 411. The server 411 may transmit the location information to the user terminal 412.

For example, the external electronic device 410 may identify the location of the electronic device 300 and/or the plurality of units 301-1 and 301-2 based on the received wireless signal. The external electronic device 410 may transmit the identified location of the electronic device 300 and/or the plurality of units 301-1 and 301-2 to the server 411. The server 411 may transmit the identified location of the electronic device 300 and/or the plurality of units 301-1 and 301-2 to the user terminal 412.

For example, the external electronic device 410 may transmit the received wireless signal to the server 411, and the server 411 may identify the location of the electronic device 300 and/or the plurality of units 301-1 and 301-2 based on the received wireless signal.

For example, in the operation mode, at least one unit of the plurality of units 301-1 and 301-2 may transmit the wireless signal to the user terminal 412. The user terminal 412 may identify the location of the electronic device 300 and/or the plurality of units 301-1 and 301-2 based on the received wireless signal.

For example, the wireless signal may include a Bluetooth low energy (BLE) advertising packet. For example, the operation set in the operation mode may refer to a tracker operation for identifying the location of the electronic device 300 and/or the plurality of units 301-1 and 301-2 using BLE advertising. For example, the electronic device 300 may transmit the wireless signal to all nearby external electronic devices 410 using BLE advertising.

For example, the external electronic device 410 and/or the user terminal 412 may be set to receive the BLE advertising packet.

For example, the processor 320-1, 320-2 may determine the unit to perform the operation mode among the plurality of units 301-1 and 301-2 based on the state information of the battery 389-1, 389-2. For example, the processor 320-1, 320-2 may determine the unit to perform the operation mode among the plurality of units 301-1 and 301-2 based on the cumulative usage of the battery 389-1, 389-2 of each of the units 301-1 and 301-2.

For example, the processor 320-1, 320-2 may determine the unit 301-1 or 301-2 with low (e.g., relatively low, or the lowest compared to that of other batteries/units) cumulative usage of the battery 389-1, 389-2 as the unit to perform the operation mode. For example, cumulative usage may refer to an amount a battery has been used or drained over its lifetime or since a last charge (e.g., full charge), or may refer to an amount (e.g., total amount) of time the battery has been discharged/discharging since a last charge (e.g., full charge) or over its lifetime. For example, when the cumulative usage of the battery 389-1 of the first unit 301-1 is lower than the cumulative usage of the battery 389-2 of the second unit 301-2, the processor 320-1, 320-2 of the electronic device 300 may determine the first unit 301-1 as the unit to perform the operation mode. In other words, the unit having a battery with more charge or power remaining may be selected to perform the operation mode.

For example, the processor 320-1, 320-2 may control the determined unit to perform the operation mode. For example, in FIG. 3, when the electronic device 300 sets the first unit 301-1 as the unit to perform the operation mode, the electronic device 300 may control the first unit 301-1 to perform the set operation in the operation mode. For example, in the operation mode, the first unit 301-1 may transmit the wireless signal for the user terminal 412 to identify the location of the electronic device 300 and/or the plurality of units 301-1 and 301-2.

As described above, the electronic device 300 may determine the unit to perform an operation in the operation mode based on the cumulative usage of the battery 389-1, 389-2 of each of the units. For example, when there is a difference between the cumulative usage of the battery 389-1 of the first unit 301-1 and the cumulative usage of the battery 389-2 of the second unit 301-2, the electronic device 300 may enable the unit with low cumulative usage of the battery 389-1, 389-2 to perform the set operation. The electronic device 300 may maintain a balance of the cumulative usage of the battery 389-1, 389-2 of each of the units by enabling the unit with the low cumulative usage of the battery 389-1, 389-2 to perform the operation. The electronic device 300 may maintain the balance of the cumulative usage of the battery 389-1, 389-2 of each of the units, thus preventing the battery 389-1, 389-2 of some of the plurality of units 301-1 and 301-2 from being discharged first when the plurality of units is used simultaneously.

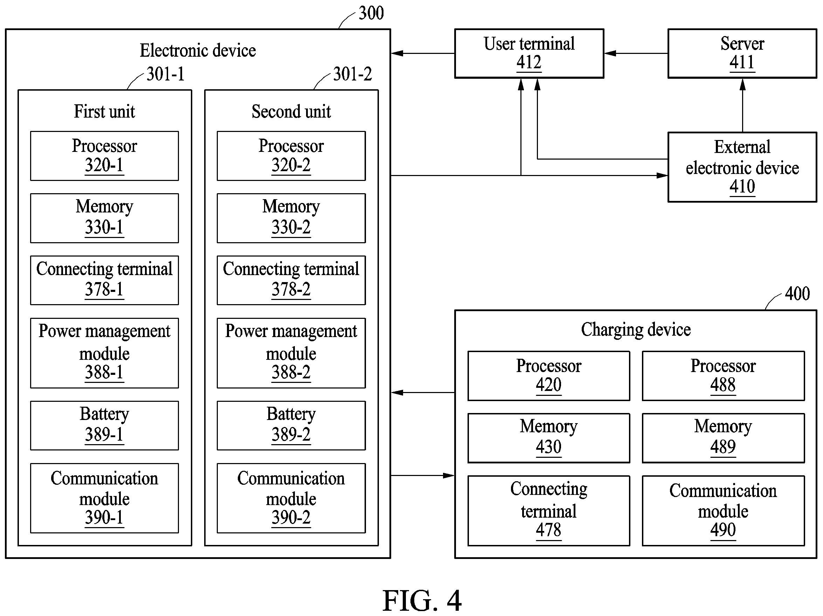

FIG. 4 is a schematic block diagram of the electronic device 300 (e.g., the electronic device 101 of FIG. 1) and a charging device 400 (e.g., the electronic device 102 of FIG. 1) according to an embodiment.

Referring to FIG. 4, the electronic device 300 may include the plurality of units 301-1 and 301-2 according to an embodiment.

The description of the electronic device 300, the user terminal 412, the external electronic device 410, and the server 411 provided with reference to FIG. 3 may apply to the electronic device 300, the user terminal 412, the external electronic device 410, and the server 411 illustrated in FIG. 4 in substantially the same manner, and any repeated description related thereto may be omitted.

For example, each of the plurality of units 301-1 and 301-2 may include at least one of a processor 320-1, 320-2 (e.g., the processor 120 of FIG. 1), a memory 330-1, 330-2 (e.g., the memory 130 of FIG. 1), a connecting terminal 378-1, 378-2 (e.g., the connecting terminal 178 of FIG. 1), a power management module 388-1, 388-2 (e.g., the power management module 188 of FIG. 1), a battery 389-1, 389-2 (e.g., the battery 189 of FIG. 1), and/or a communication module 390-1, 390-2 (e.g., the communication module 390 of FIG. 1), or a combination thereof.

Referring to FIG. 4, the charging device 400 may include at least one of a processor 420 (e.g., the processor 120 of FIG. 1), a memory 430 (e.g., the memory 130 of FIG. 1), a connecting terminal 478 (e.g., the connecting terminal 178 of FIG. 1), a power management module 488 (e.g., the power management module 188 of FIG. 1), a battery 489 or a power source (e.g., the battery 189 of FIG. 1), and/or a communication module 490 (e.g., the communication module 190 of FIG. 1), or a combination thereof.

For example, the processor 320-1, 320-2 of all of, or one or more of, the plurality of units 301-1 and 301-2 may transmit state information of one or more of the battery 389-1, 389-2 to the charging device 400. For example, the connecting terminal 378-1, 378-2 of each of the units may be connected to the connecting terminal 478 of the charging device 400. For example, the communication module 390-1, 390-2 of each of the units may be connected to the communication module 490 of the charging device 400. For example, the processor 320-1, 320-2 of each of the units and the processor 420 of the charging device 400 may perform data communication using the connecting terminal 378-1, 378-2, 478, and/or the communication module 390-1, 390-2, 490. For example, the electronic device 300 may be connected to the charging device 400 for communication using power line communication (PLC).

For example, the electronic device 300 may charge the battery 389-1, 389-2 using power supplied by the charging device 400. For example, the charging device 400 may supply power from the battery 489 or power source to the connecting terminal 378-1, 378-2 of each of the units via the connecting terminal 478. Each of the units may charge the battery 389-1, 389-2 using the power supplied via the connecting terminal 378-1, 378-2. In another example, the charging device 400 may wirelessly supply power from the battery 489 to each of the units. That is, charging device 400 may comprise a wireless charging circuit configured to wirelessly transmit power, while each unit may comprise a wireless charging circuit configured to wirelessly receive power and provide the received power to the battery 389-1, 389-2 for charging.

For example, the processor 320-1, 320-2 of the electronic device 300 may receive a control signal from the charging device 400. For example, each of the units of the electronic device 300 may receive the control signal from the charging device 400 via the connecting terminal 378-1, 378-2, 478, or only one, or some, of the units of the electronic device 300 may receive the control signal from the charging device 400.

For example, the processor 320-1, 320-2 of the electronic device 300 may control the plurality of units 301-1 and 301-2 (or a singular one thereof) to perform a preset operation mode according to the control signal received from the charging device 400.

For example, the control signal received from the charging device 400 may be transmitted to a unit to perform the operation mode among the plurality of units 301-1 and 301-2. For example, when the first unit 301-1 receives the control signal from the charging device 400, the first unit 301-1 may perform the set operation in the operation mode.

For example, when the first unit 301-1 and the second unit 301-2 receive the control signal from the charging device 400, the first unit 301-1 and the second unit 301-2 may perform the set operation in the operation mode.

For example, when at least one of the plurality of units 301-1 and 301-2 is connected to the charging device 400, the electronic device 300 may be set to perform the set operation in the operation mode. For example, when at least one connecting terminal 378-1, 378-2 of the plurality of units 301-1 and 301-2 and the connecting terminal 478 of the charging device 400 are connected, the electronic device 300 may be set to perform the set operation in the operation mode.

For example, the control signal may be transmitted to the unit to perform the operation mode among the plurality of units 301-1 and 301-2 based on the state information of the battery 389-1, 389-2. For example, the charging device 400 may determine (e.g., identify, detect, select etc.) the unit to perform the operation mode among the plurality of units 301-1 and 301-2 based on the state information of the battery 389-1, 389-2. The charging device 400 may transmit the control signal to the determined unit.

For example, the charging device 400 may identify cumulative usage of the battery 389-1, 389-2 of each of the units based on the state information of the battery 389-1, 389-2 received from each of the units. The charging device 400 may determine a unit with low cumulative usage of the battery 389-1, 389-2 as the unit to perform the operation mode. The charging device 400 may transmit the control signal to the determined unit to perform the operation mode.

For example, the battery 489 (or power source) of the charging device 400 may store (or otherwise provide a source for) power for charging the battery 389-1, 389-2 of the plurality of units 301-1 and 301-2. The communication module 490 of the charging device 400 may be connected to the communication module 390-1, 390-2 of the plurality of units 301-1 and 301-2 (or a singular one thereof) via the connecting terminal 478 to perform data communication. In various examples, instead of or in addition to the battery 489, the charging device 400 may comprise a/another power source for use in charging the battery 389-1, 389-2 of the plurality of units 301-1, 301-2. For instance, in a case where the charging device 400 is itself connected to a power supply (e.g., a 100V, 120V, 200V, 220V, 230V, 240V etc. mains power supply) and receiving power from the power supply, the power source of the charging device 400 may correspond to circuitry configured to provide (e.g., route, transfer etc.) power for charging the battery 389-1, 389-2 of the plurality of units 301-1 and 301-2 from the power supply to the electronic device 300 or, more specifically, to one or more of the plurality of units 301-1, 301-2 or battery 389-1, 389-2 thereof.

For example, the processor 420 of the charging device 400 may receive the state information of the battery 389-1, 389-2 from each of the plurality of units 301-1 and 301-2. For example, the processor 420 of the charging device 400 may receive the state information of the battery 389-1, 389-2 of each of the units via the connecting terminal 478.

For example, the processor 420 of the charging device 400 may determine the unit to perform the preset operation mode among the plurality of units 301-1 and 301-2 based on the state information of the battery 389-1, 389-2. For example, the processor 420 of the charging device 400 may determine the unit with the low cumulative usage of the battery 389-1, 389-2 as the unit to perform the operation mode.

For example, the charging device 400 may transmit the control signal for performing the operation mode to the unit to perform the operation mode. For example, when the cumulative usage of the battery 389-1 of the first unit 301-1 is low, the charging device 400 may transmit the control signal to the first unit 301-1. The first unit 301-1 may perform the set operation according to the received control signal.

As described above, the electronic device 300 may be connected to the charging device 400 to charge the battery 389-1, 389-2 of one or more (e.g., each) of the units. The electronic device 300 may control, based on the control signal received from the charging device 400, at least one unit among the plurality of units 301-1 and 301-2 to perform the set operation either during charging of the battery 389-1, 389-2 of one or more of the units or after the completion of the charging of the battery 389-1, 389-2 of one or more of the units. It will be appreciated that completion of charging of the battery 389-1, 389-2 for one unit may occur before completion of charging of the battery 389-1, 389-2 for another unit. In certain examples, the set operation may be performed when completion of charging of the battery 389-1, 389-2 has occurred for one unit, or may be performed when completion of charging of the battery 389-1, 389-2 has occurred for both units. In some examples, the unit for which charging of the battery 389-1, 389-2 is completed may perform the set operation, while charging of the battery 389-1, 389-2 is ongoing for the other unit; while in other examples, the unit for which charging of the battery 389-1, 389-2 is not completed may perform the set operation.

For example, the unit to perform the set operation mode may perform the operation mode while charging the battery 389-1, 389-2 or perform the operation mode after the completion of the charging of the battery 389-1, 389-2.

For example, a unit other than the unit that performs the set operation mode among the plurality of units 301-1 and 301-2 may be powered off when the charging of the battery 389-1, 389-2 is completed. For example, the first unit 301-1 may perform the set operation mode according to the control signal received from the charging device 400, and the second unit 301-2 may be powered off when the charging of the battery 389-2 is completed.

In FIGS. 3 and 4, the electronic device 300 may be TWS wireless earbuds, and the electronic device 400 may be a charger such as a cradle. The electronic device 300 may be coupled to the charging device 400 to charge the battery 389-1, 389-2 of the electronic device 300. The coupling of the electronic device 300 and the charging device 400 may mean that the connecting terminal 378-1, 378-2 of the electronic device 300 and the connecting terminal 478 of the charging device 400 may be electrically connected to charge the battery 389-1, 389-2 of the electronic device 300. In another example, the coupling of the electronic device 300 and the charging device 400 may mean the electronic device 300 and the charging device 400 are coupled for wireless power transfer for charging the battery 389-1, 389-2 of the electronic device 300 - e.g., when accommodated in the cradle or proximate thereto, electronic device 300 may be capable of wirelessly receiving power from the charging device 400, for charging the battery 389-1, 389-2.

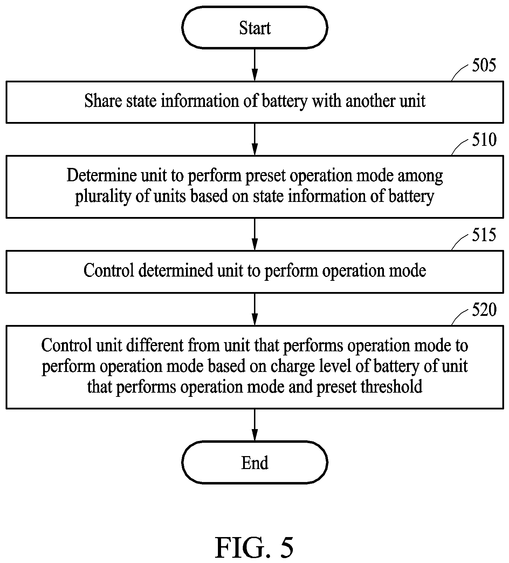

FIG. 5 is a diagram illustrating an operation of the electronic device 300 (e.g., the electronic device 101 of FIG. 1 and/or the electronic device 300 of FIGS. 3 and/or 4) to determine a unit to perform an operation mode and to perform the operation mode.

In operation 505, at least one unit of a plurality of unit (e.g., the plurality of units 301-2 and 301-2 of FIGS. 3 and 4) of the electronic device 300 may share state information of a battery (e.g., the battery 189 of FIG. 1 and the battery 389-1, 389-2 of FIGS. 3 and 4) with another unit (e.g., one of the plurality of units 301-1, 301-2, or another unit of the electronic device 300, a unit of an external device or an external device). For example, each (of the) unit(s) may establish a connection for communication via a communication module (e.g., the communication module 190 of FIG. 1 and the communication module 390-1, 390-2 of FIGS. 3 and 4), such as with the unit to which the state information is to be shared. A processor (e.g., the processor 120 of FIG. 1 and the processor 320-1, 320-2 of FIGS. 3 and 4) of each of the at least one unit may transmit the state information of the battery 389-1, 389-2 to the another unit via the communication module 390-1, 390-2.

In operation 510, one or more of the plurality of units 301-1 and 301-2 may determine a unit to perform an operation mode among the plurality of units 301-1 and 301-2 based on the state information of the battery 389-1, 389-2. For example, the operation mode may refer to a mode in which at least one unit of the plurality of units 301-1 and 301-2 performs a set operation by consuming the battery 389-1, 389-2.

For example, in operation 510, the processor 320-1, 320-2 of the plurality of units 301-1 and 301-2 may determine a unit with low cumulative usage of the battery 389-1, 389-2 as the unit to perform the operation mode. In another example, the processor 320-1, 320-2 of one of the plurality of units 301-1, 301-2 (e.g., a master unit) may identify or determine a unit to perform the operation mode based on the state information, such as by identifying a unit with low cumulative usage of the battery 389-1, 389-2 as the unit to perform the operation mode. In operation 515, the electronic device 300, the one of the plurality of units 301-1, 301-2 or the plurality of units 301-1 and 301-2 may control or instruct the determined (e.g. identified, selected etc.) unit to perform the operation mode. For example, when a condition of the operation mode is satisfied (e.g., the electronic device 300 is disconnected from the user terminal 412), the processor 320-1, 320-2 of the one unit 320-1, 320-2 or of the plurality of units 301-1 and 301-2 may control or instruct the determined unit to perform the set operation.

In operation 520, the electronic device 300, the one of the plurality of units 301-1, 301-2 or the plurality of units 301-1 and 301-2 may control another unit different from the unit that performs the operation mode to perform the operation mode (e.g., to also perform the same operation mode, or to perform a different operation mode) based on a charge level of the battery 389-1, 389-2 of the unit that performs the operation mode and a preset threshold. For example, when a charge level of the battery 389-1 is less than or equal to the set threshold as the first unit 301-1 performs the set operation, the processor 320-1 of the first unit 301-1 or the processor 320-2 of the second unit 301-2 may enable the second unit 301-2 to perform the set operation.

For example, the other unit among the plurality of units 301-1 and 301-2 of the electronic device 300 (i.e. other than the unit that is controlled or instructed to perform the operation mode according to operation 515) may be powered off. For example, when an operation mode deactivation condition (e.g., a condition in which at least one of the plurality of units 301-1 and 301-2 is connected to the user terminal 412 for communication) is not satisfied for a set time in the operation mode condition, the other unit among the plurality of units 301-1 and 301-2 may be powered off.

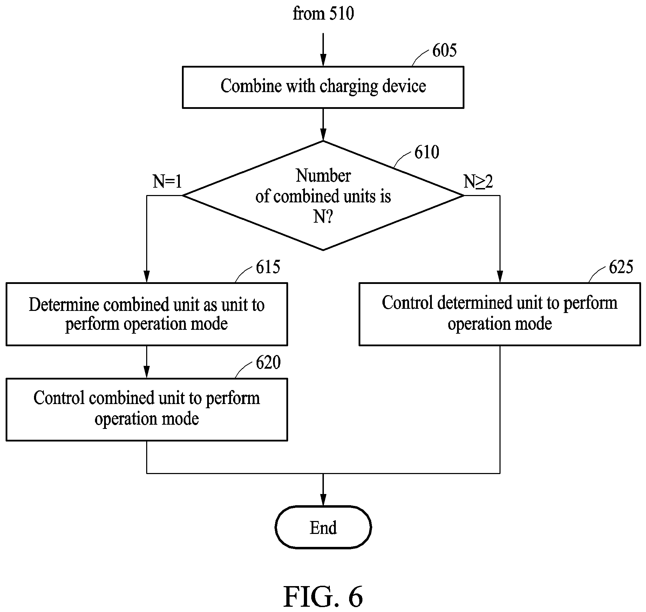

FIG. 6 is a diagram illustrating an operation of the electronic device 300 (e.g., the electronic device 101 of FIG. 1 and/or the electronic device 300 of any one or more of FIGS. 3 to 5) to determine a unit to perform an operation mode depending on a number of units connected (or coupled, or combined (where `combined' may be considered to mean 'connected' herein)) with a charging device (e.g., the electronic device 102 of FIG. 1 and/or the charging device 400 of FIGS. 3 and 4).

Referring to FIG. 6, in operation 605, a plurality of units (e.g., the plurality of units 301-1 and 301-2 of FIGS. 3 and 4) of the electronic device 300 may be connected or coupled with the charging device 400. For example, a connecting terminal (e.g., the connecting terminal 178 of FIG. 1 and the connecting terminal 378-1, 378-2 of FIGS. 3 and 4) of each of the plurality of units 301-1 and 301-2 may be connected to a connecting terminal (e.g., the connecting terminal 178 of FIG. 1 and the connecting terminal 478 of FIG. 4) of the charging device 400.

In operation 610, the electronic device 300 may determine the number of units combined with the charging device 400. For example, one, some or all of the plurality of units 301-1 and 301-2 of the electronic device 300 may be connected to the charging device 400.

In operation 615, when the number of units connected with the charging device 400 is one, the electronic device 300 may determine the connected unit as a unit to perform an operation mode. In a further example, the unit, which is determined by the electronic device 300 in operation 615 to perform the operation mode, may be the same as or different from the unit, which is determined in operation 510 to perform the operation mode.

In operation 620, the electronic device 300 may control one or more of units 301-1 and 301-2 for the connected unit to perform the operation mode. For example, the connected unit may control, via the electronic device 300 (e.g. by the connected unit transmitting instructions to a processor of the electronic device 300 which is configured to control the one or more units 301-1, 301-2) the one or more of units 301-1, 301-2 to perform the operation mode. For example, the processor 320-1, 320-2 of the unit connected to the charging device 400 may control the unit to perform the set operation. For example, when the processor 320-1, 320-2 of a unit not connected with the charging device 400 satisfies a set condition in a standby state, the processor320-1, 320-2 of this unit may perform an operation according to the set condition. For example, when a power-off condition does not cease or end (e.g., the power-off condition may cease or end when: a unit is connected to the user terminal 412, a unit receives an input from the user terminal 412, a unit connects with the charging device 400, etc.) for a set time, the processor 320-1, 320-2 may power off a unit (e.g., the unit for which the power-off condition does not cease). For example, the processor 320-1, 320-2 may continuously maintain a connection standby state with the user terminal 412.

For example, in operation 510 of FIG. 5, the electronic device 300 may determine the first unit 301-1 between the first unit 301-1 and the second unit 301-2 as the unit to perform the operation mode based on cumulative usage of a battery (e.g., the battery 178 of FIG. 1 and the battery 389-1, 389-2 of FIGS. 3 and 4). When only the second unit 301-2 is connected or coupled to the charging device 400 in operation 605, the electronic device 300 may determine the second unit 301-2 as the unit to perform the operation mode in operation 615 and may control the second unit 301-2 to perform a set operation. Accordingly, in some examples, a first criteria (for determining a unit to perform the operation mode) relating to whether or not a unit is connected with the charging device 400 may have priority over a second criteria (for determining a unit to perform the operation mode) relating to state information of the battery 389-1, 389-2; e.g., the first criteria make take precedence over, or overrule, the second criteria, when determining one or more units to perform the operation mode.

When the number of units connected with the charging device 400 is two or more, in operation 625, the electronic device 300 may control the plurality of units 301-1 and 301-2 such that the determined unit performs the operation mode. Here, for example: the determined unit that performs the operation mode in operation 625 may refer to the unit determined in operation 510 of FIG. 5; or the determined unit that performs the operation mode in operation 625 may refer to the unit determined in operation 510 of FIG. 5 if this unit is among the two or more units connected with the charging device 400, and if not then one of the two or more units connected with the charging device 400 is determined for performing the operation mode in operation 625.

For example, when two or more units are connected with the charging device 400, the electronic device 300 may determine the unit to perform the operation mode based on the cumulative usage of the battery 389-1, 389-2 of the units connected with the charging device 400 (i.e., based on the state information of the battery 389-1, 389-2).

For example, when the cumulative usage of the battery 389-1 of the first unit 301-1 is lower than the cumulative usage of the battery 389-2 of the second unit 301-2, and the cumulative usage of the battery 389-2 of the second unit 301-2 is lower than cumulative usage of a battery of a third unit, the electronic device 300 may determine the first unit 301-1 as the unit to perform the operation mode in operation 510 of FIG. 5. When the second unit 301-2 and the third unit are connected to the charging device 400 in operation 605 (i.e., and the first unit 301-1 is not connected to the charge device 400), the electronic device 300 may determine the second unit 301-2 as the unit to perform the operation mode based on the cumulative usage of the battery.

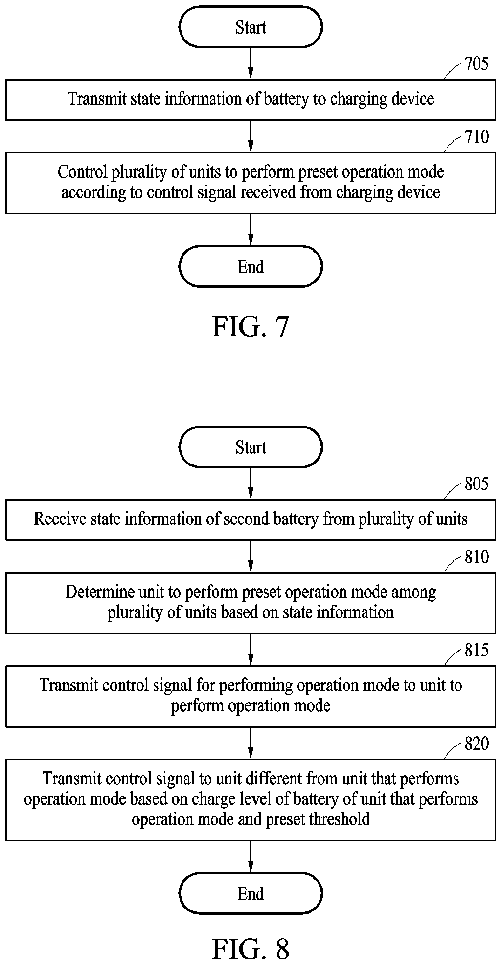

FIG. 7 is a diagram illustrating an operation of an electronic device (e.g., the electronic device 101 of FIG. 1 and/or the electronic device 300 of any one or more of FIGS. 3 to 6) combined with a charging device (e.g., the electronic device 102 of FIG. 1 and/or the charging device 400 of FIG. 4) to perform an operation mode according to an embodiment.

Referring to FIG. 7, the electronic device 300 according to an embodiment may transmit state information of a battery (e.g., the battery 189 of FIG. 1 and/or the battery/batteries 389-1, 389-2 of FIGS. 3 and/or 4) to the charging device 400 in operation 705. For example, the electronic device 300 may be connected to, or combined with, the charging device 400 via a connecting terminal (e.g., the connecting terminal 178 of FIG. 1 and the connecting terminal 378-1, 378-2 of FIGS. 3 and 4). For example, one or more of a plurality of units (e.g., the first unit 301-1 and/or the second unit 301-2 of FIGS. 3 and 4) may perform data communication (e.g., PLC communication) with the charging device 400 via the connecting terminal 378-1, 378-2 using a communication module (e.g., the communication module 190 of FIG. 1 and/or the communication module 390-1, 390-2 of FIGS. 3 and/or 4).

In operation 710, the electronic device 300 may control the plurality of units to perform a preset operation mode according to a control signal received from the charging device 400. For example, the operation mode may refer to an operation in which one or more of the plurality of units 301-1 and 301-2 consume the battery 389-1, 389-2.

For example, the operation mode may refer to an operation in which at least one unit of the plurality of units 301-1 and 301-2 transmits a wireless signal for the user terminal 412 to identify a location of the electronic device 300 and/or the plurality of units 301-1 and 301-2. For example, in the operation mode, at least one unit of the plurality of units 301-1 and 301-2 may transmit a BLE advertising packet to all nearby devices based on a BLE advertising scheme.

For example, the control signal may be transmitted to a unit with low cumulative usage of the battery 389-1, 389-2 included in the state information of the battery 389-1, 389-2. For example, the charging device 400 may identify the unit with the lowest cumulative usage of the battery 389-1, 389-2 among the plurality of units 301-1 and 301-2 based on the state information of the battery 389-1, 389-2. The charging device 400 may transmit the control signal to the unit with the low cumulative usage of the battery 389-1, 389-2.

FIG. 8 is a diagram illustrating an operation of a charging device (e.g., the electronic device 102 of FIG. 1 and/or the charging device 400 of FIG. 4) to determine a unit to perform an operation mode and perform the operation mode according to an embodiment.

Referring to FIG. 8, in operation 805, the charging device 400 may receive state information of a second battery (e.g., the battery/batteries 389-1, 389-2 of FIGS. 3 and/or 4) from at least one unit (e.g., the first unit 301-1 and the second unit 301-2 of FIGS. 3 and/or 4). For example, the charging device 400 may receive the state information of the second battery 389-1, 389-2 from each of the plurality of units 301-1 and 301-2 connected to the charging device via a connecting terminal (e.g., the connecting terminal 478 of FIG. 4).

In operation 810, the charging device 400 may determine a unit to perform a preset operation mode among the plurality of units 301-1 and 301-2 based on the state information. For example, the charging device 400 may determine a unit with low cumulative usage of the battery 389-1, 389-2 as the unit to perform the operation mode.

In operation 815, the charging device 400 may transmit a control signal for performing the operation mode to the unit to perform the operation mode.

In operation 820, the charging device 400 may transmit the control signal to a unit different from the unit that performs the operation mode based on a charge level of the battery 389-1, 389-2 of the unit determined in operation 815 and a preset threshold.

For example, in operation 815, the charging device 400 may transmit the control signal to the first unit 301-1. When the charge level of the battery 389-1 of the first unit 301-1 is less than or equal to the preset threshold, the charging device 400 may transmit the control signal (or another control signal for performing the operation mode) to the second unit 301-2 in operation 820. For example, the charging device 400 may charge the second battery 389-1 of the first unit 301-1. In some examples, the charging device 400 may determine the charge level of the battery 389-1 of the first unit 301-1 is less than or equal to the preset threshold based on state information received from the first unit 301-1 when the charge level is less than or equal to the preset threshold or another indication that the charge level is less than or equal to the preset threshold; while in other examples, the charging device 400 may estimate a charge level of the battery 389-1 of the first unit 301-1 based on the state information received in operation 805 and a predicted power consumption of the first unit 301-1 performing the operation mode. In various examples, when the charge level of the battery 389-1 of the first unit 301-1 is less than or equal to the preset threshold, the charging device 400 may also transmit, to the first unit 301-1, another control signal for ceasing performance of the operation mode (e.g., stopping the operation mode). Additionally or alternatively, the first unit 301-1 may, when the charge level of the battery 389-1 of the first unit 301-1 is less than or equal to the preset threshold (e.g., when the processor of the first unit 301-1 detects this to occur), stop performing the operation mode.

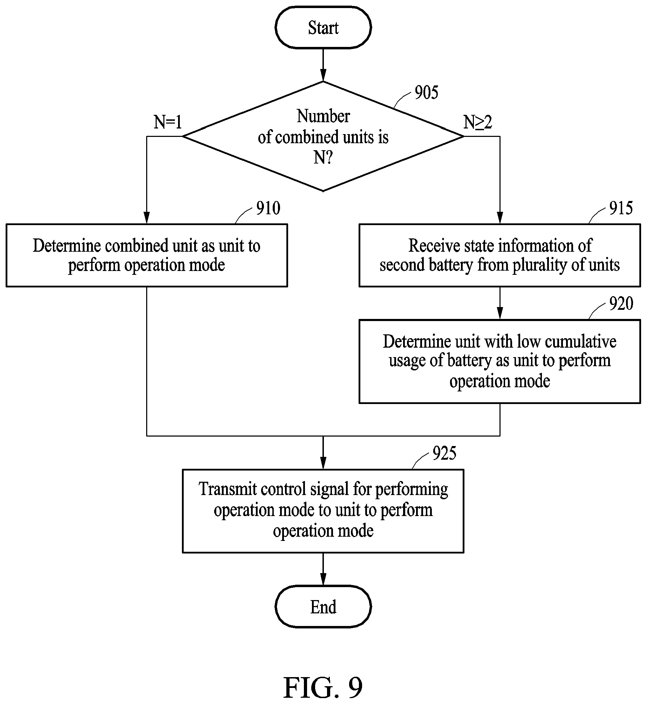

FIG. 9 is a diagram illustrating an operation of a charging device (e.g., the electronic device 102 of FIG. 1 and/or the charging device 400 of FIG. 4) to determine a unit to perform an operation depending on a number of units connected or coupled to/with the charging device.

Referring to FIG. 9, in operation 905, the charging device 400 according to an embodiment may determine the number of units connected to the charging device 400. For example, the charging device 400 may perform data communication with an electronic device (e.g., the electronic device 101 of FIG. 1 and/or the electronic device 300 of any one or more of FIGS. 3 and 4) via a connecting terminal (e.g., the connecting terminal 478 of FIG. 4). The charging device 400 may determine the number of combined units based on data received through data communication.

When the number of connected units is one, in operation 910, the charging device 400 may determine the connected unit as the unit to perform the operation mode.

When the number of connected units are two or more, in operation 915, the charging device 400 may receive state information of a second battery (e.g., the battery/batteries 389-1, 389-2 of FIGS. 3 and 4) from the plurality of units 301-1 and 301-2 (e.g., the two or more connected units).

In operation 920, the charging device 400 may determine a unit with low cumulative usage of the battery 389-1, 389-2 as the unit to perform the operation mode. For example, the unit may be determined from among the two or more connected units.

The description of operations 805 and 810 of FIG. 8 may apply to above-described operations 915 and 920, respectively, in substantially the same manner.

For example, the charging device 400 may transmit a control signal for performing the operation mode to the determined unit to perform the operation mode.

When one unit of the plurality of units 301-1 and 301-2 is connected to the charging device 400, in operation 925, the charging device 400 may transmit the control signal to the unit connected to the charging device 400.

When two or more units of the plurality of units 301-1, 301-2 are connected to the charging device 400, in operation 925, the charging device 400 may transmit the control signal to a unit (among the two or more connected units) with low cumulative usage of the battery 389-1, 389-2 included in the state information of the battery 389-1, 389-2.

The electronic device 300 or the charging device 400 of FIGS. 1 to 9 may enable at least one of the plurality of units 301-1 and 301-2 to perform a set operation based on the state information (e.g., cumulative usage of the battery 389-1, 389-2, a number of charging/discharging cycles, etc.) of the battery 389-1, 389-2. The electronic device 300 or the charging device 400 may perform battery balancing of the battery 389-1, 389-2 of the plurality of units 301-1 and 301-2 by enabling the unit with the low cumulative usage of the battery 389-1, 389-2 to perform the set operation. In other words, by selecting the unit having a battery with a higher charge level (i.e., relatively, compared to the other unit(s)) to perform the set operation, electronic device 300 or the charging device 400, may avoid over-use of the battery of another unit (i.e., having a battery with a relatively lower charge level), which may mitigate an issue causing shortening of the lifespan of the battery of the other unit. Accordingly, overall device health for the other unit may be improved, and a malfunction chance of the electronic device or the other unit may be reduced.

In addition, the electronic device 300 or the charging device 400 may determine the unit to perform the operation mode based on the state information of the battery 389-1, 389-2, such as the number of charging/discharging cycles of the battery 389-1, 389-2, a lifespan of the battery 389-1, 389-2, and the like in substantially the same manner as the example in which the electronic device 300 or the charging device 400 determines the unit to perform the operation mode based on the cumulative usage of the battery 389-1, 389-2 of the plurality of units 301-1 and 301-2 in FIGS. 1 to 9.

In other words, although examples above describe using information on cumulative usage of the battery 389-1, 389-2 which may be included in the state information of the battery 389-1, 389-2, in other examples the state information may instead (or additionally) comprise other information such as information on a number of charging/discharging cycles of the battery 389-1, 389-2, information on a lifespan of the battery 389-1, 389-2, and/or other information related to the battery 389-1, 389-2, where this other information is used as the basis for determining the unit to perform the operation mode. For example, a unit having a battery with fewer charging/discharging cycles compared to the battery of another unit may be determined (based on corresponding information included in the state information) for performing the operation mode, instead of the other unit. In another example, a unit having a battery with an estimated, or known, longer lifespan than the battery of another unit may be determined (based on corresponding information included in the state information) for performing the operation mode, instead of the other unit

In various examples, the state information of the battery may include an amount of applied current and/or an amount of battery voltage drop of each of the plurality of units 301-1 and 301-2. For example, when the same amount of current is applied to the first unit 301-1 and the second unit 301-2 and when the amount of battery voltage drop of the battery 389-1 of the first unit 301-1 is greater than the amount of battery voltage drop of the second unit 301-2, the electronic device 300 may determine the second unit 301-2 with a smaller amount of battery voltage drop as the unit to perform the operation mode. For example, the amount of battery voltage drop of each of the plurality of units 301-1 and 301-2 may be measured after the battery 389-1, 389-2 of each of the plurality of units 301-1 and 301-2 is fully charged or from a point in time at which power stored in the battery 389-1, 389-2 is consumed.

Although the examples in which the electronic device 300 includes the first unit 301-1 and the second unit 301-2 are described with reference to FIGS. 1 to 9, the number of units included in the electronic device 300 is not limited to the above-described examples.

According to an embodiment, an electronic device (e.g., the electronic device 101 of FIG. 1 and/or the electronic device 300 of FIGS. 3 and/or 4) may include a plurality of units (e.g., the first unit 301-1 and the second unit 301-2 of FIGS. 3 and/or 4). Each of the plurality of units 301-1 and 301-2 may include at least one of a battery (e.g., the battery 189 of FIG. 1 and/or the battery 389-1, 389-2 of FIGS. 3 and/or 4), a processor (e.g., the processor 120 of FIG. 1 and/or the processor 320-1, 320-2 of FIGS. 3 and/or 4), a communication module (e.g., the communication module 190 of FIG. 1 and/or the communication module 390-1, 390-2 of FIGS. 3 and/or 4) configured to establish a connection for communication with a user terminal (e.g., the user terminal 412 of FIGS. 3 and/or 4), and/or a memory (e.g., the memory of FIG. 1 and/or the memory 330-1, 330-2 of FIGS. 3 and/or 4) electrically connected to the processor 120, 320-1, 320-2 and configured to store instructions executable by the processor 120, 320-1, 320-2, or a combination thereof. When the instructions are executed, the processor 120, 320-1, 320-2 may share state information of the battery 189, 389-1, 389-2 with another unit. The processor 120, 320-1, 320-2 may determine a unit to perform a preset operation mode among the plurality of units 301-1 and 301-2 based on the state information of the battery 189, 389-1, 389-2. The processor 120, 320-1, 320-2 may be configured to control the determined unit to perform the operation mode.

The processor 120, 320-1, 320-2 may transmit, in the operation mode, a wireless signal for the user terminal 412, the external electronic device 410 and/or the server 411 to identify a location of the plurality of units 301-1 and 301-2.

The processor 120, 320-1, 320-2 may determine a unit with low cumulative usage of the battery 189, 389-1, 389-2 included in the state information of the battery 389-1, 389-2 as the unit to perform the operation mode.

The processor 120, 320-1, 320-2 may control a unit different from the unit that performs (e.g., initially performs, or is first determined to perform) the operation mode to perform the operation mode based on a charge level of the battery 189, 389-1, 389-2 of the unit that performs (e.g., initially performs, or is first determined to perform))))) the operation mode and a preset threshold.

According to an embodiment, an electronic device (e.g., the electronic device 101 of FIG. 1 and/or the electronic device 300 of FIGS. 3 and/or 4) may include a plurality of units (e.g., the first unit 301-1 and the second unit 301-2 of FIGS. 3 and/or 4). Each of the plurality of units 301-1 and 301-2 may include at least one of a battery (e.g., the battery 189 of FIG. 1 and/or the battery 389-1, 389-2 of FIGS. 3 and/or 4), a processor (e.g., the processor 120 of FIG. 1 and/or the processor 320-1, 320-2 of FIGS. 3 and/or 4), a communication module (e.g., the communication module 190 of FIG. 1 and/or the communication module 390-1, 390-2 of FIGS. 3 and/or 4) configured to establish a connection for communication with a user terminal (e.g., the user terminal 412 of FIGS. 3 and/or 4) and/or a charging device (e.g., the electronic device 102 of FIG. 1 and/or the charging device 400 of FIG. 4), and/or a memory (e.g., the memory 130 of FIG. 1 and/or the memory 330-1, 330-2 of FIGS. 3 and/or 4) electrically connected to the processor 120, 320-1, 320-2 and configured to store instructions executable by the processor 120, 320-1, 320-2, or a combination thereof. When the instructions are executed, the processor 120, 320-1, 320-2 may transmit state information of the battery 389-1, 389-2 to the charging device 400. The processor 120, 320-1, 320-2 may control the plurality of units to perform a preset operation mode according to a control signal received from the charging device 400. The control signal may be transmitted to a unit to perform the operation mode among the plurality of units 310-1 and 301-2 based on the state information of the battery 389-1, 389-2.

The processor 120, 320-1, 320-2 may transmit, in the operation mode, a wireless signal for the user terminal 412 to identify a location of one or more of the plurality of units 301-1 and 301-2.

The control signal may be transmitted, by the charging device 400, to a unit with low cumulative usage of the battery 389-1, 389-2 included in the state information of the battery 389-1, 389-2.

When one unit of the plurality of units 301-1 and 301-2 is connected to the charging device 400, the control signal may be transmitted to the unit connected to the charging device 400, and when two or more units of the plurality of units 301-1 and 301-2 are connected to the charging device 400, the control signal may be transmitted to the unit, among the two or more connected units, with the low cumulative usage of the battery 389-1, 389-2 included in the state information of the battery 389-1, 389-2.

The control signal may be transmitted to a unit among the plurality of units 301-1 and 301-2 different from a unit that was determined (e.g., previously determined, or initially determined) to perform the operation mode based on a charge level of the battery 389-1, 389-2 of the unit that was determined to perform the operation mode and on a preset threshold.

According to an embodiment, a charging device (e.g., the electronic device 102 of FIG. 1 and/or the charging device 400 of FIG. 4) may include at least one of a first battery or a power source (e.g., the battery 189 of FIG. 1 and/or the battery 489 of FIG. 4) configured to supply power to a second battery (e.g., the battery 189 of FIG. 1 and/or the battery 389-1, 389-2 of FIGS. 3 and/or 4) included in a plurality of units (e.g., the first unit 301-1 and the second unit 301-2 of FIGS. 3 and/or 4), a processor (e.g., the processor 120 of FIG. 1 and/or the processor 420 of FIG. 4), a communication module (e.g., the communication module 190 of FIG. 1 and/or the communication module 490 of FIG. 4) configured to establish a connection for communication with the plurality of units 301-1 and 301-2, and/or a memory (e.g., the memory 130 of FIG. 1 and/or the memory 430 of FIG. 4) electrically connected to the processor 420 and configured to store instructions executable by the processor 420, or a combination thereof. The processor 420 may receive state information of the second battery 389-1, 389-2 from each of the plurality of units 301-1 and 301-2. The processor 420 may determine a unit to perform a preset operation mode among the plurality of units 301-1 and 301-2 based on the state information. The processor 420 may transmit a control signal for performing the operation mode to the unit determined to perform the operation mode.

The operation mode may include an operation of transmitting a wireless signal for a unit that performs the operation mode to identify a location of one or more of the plurality of units 301-1 and 301-2.

The processor 420 may transmit the control signal to a unit determined to have low cumulative usage of the battery 389-1, 389-2 based on information included in the state information of the battery 389-1, 389-2.

When one unit of the plurality of units 301-1 and 301-2 is connected to the charging device 400, the processor 420 may transmit the control signal to the unit connected to the charging device 400, and when two or more units of the plurality of units 301-1 and 301-2 are connected to the charging device 400, the processor 420 may transmit the control signal to the unit (among the two or more connected units) with the low cumulative usage of the battery 389-1, 389-2 based on information included in the state information of the battery 389-1, 389-2.

The processor 420 may transmit the control signal to a unit different from the unit that was determined (e.g., previously or initially determined) to perform the operation mode, based on a charge level of the battery 389-1, 389-2 of the unit that performs the operation mode among the plurality of units 301-1 and 301-2 and on a preset threshold.

When charging of the second battery 398-1, 389-2 is completed, the processor 420 may transmit the control signal to the unit to perform the operation mode.

Further, the present disclosure includes various examples, aspects, embodiments etc. as set out in the following numbered paragraphs:
Paragraph 1. An electronic device comprising a plurality of units, wherein each of the plurality of units comprises: a battery; a processor; a communication module configured to establish a communication connection with a user terminal; and a memory electrically connected to the processor and configured to store instructions executable by the processor, wherein, when the instructions are executed, the processor is configured to:
   share state information of the battery with another unit;
   determine a unit to perform a preset operation mode among the plurality of units based on state information of the battery; and
   control the determined unit to perform the operation mode.
Paragraph 2. The electronic device of Paragraph 1, wherein the processor is configured to transmit a wireless signal for the user terminal to identify a location of the plurality of units in the operation mode.
Paragraph 3. The electronic device of one of Paragraphs 1 and 2, wherein the processor is configured to determine a unit with low cumulative usage of the battery comprised in the state information of the battery as the unit to perform the operation mode.
Paragraph 4. The electronic device of one of Paragraphs 1 to 3, wherein the processor is configured to control a unit different from a unit that performs the operation mode to perform the operation mode, based on a charge level of the battery of the unit that performs the operation mode among the plurality of units and a preset threshold.
Paragraph 5. An electronic device, comprising: a plurality of units, wherein each of the plurality of units comprises: a battery; a processor; a communication module configured to establish a communication connection with a user terminal and a charging device; and a memory electrically connected to the processor and configured to store instructions executable by the processor, wherein, when the instructions are executed, the processor is configured to:
   transmit state information of the battery to the charging device; and
   control the plurality of units to perform a preset operation mode according to a control signal received from the charging device, and
   wherein the control signal is transmitted to a unit to perform the operation mode among the plurality of units, based on the state information of the battery.
Paragraph 6. The electronic device of Paragraph 5, wherein the processor is configured to transmit a wireless signal for the user terminal to identify a location of the plurality of units in the operation mode.
Paragraph 7. The electronic device of one of Paragraphs 5 and 6, wherein the control signal is transmitted to a unit with low cumulative usage of the battery comprised in the state information of the battery.
Paragraph 8. The electronic device of one of Paragraphs 5 to 7, wherein
   when a unit of the plurality of units is combined with the charging device, the control signal is transmitted to the unit combined with the charging device, and
   when two or more units of the plurality of units are combined with the charging device, the control signal is transmitted to the unit with the low cumulative usage of the battery comprised in the state information of the battery.
Paragraph 9. The electronic device of one of Paragraphs 5 to 8, wherein the control signal is transmitted to a unit different from a unit that performs the operation mode, based on a charge level of the battery of the unit that performs the operation mode among the plurality of units and a preset threshold.
Paragraph 10. A charging device comprising: a first battery configured to supply power to a second battery comprised in a plurality of units; a processor; a communication module configured to establish a communication connection with the plurality of units; and a memory electrically connected to the processor and configured to store instructions executable by the processor, wherein the processor is configured to:
   receive state information of the second battery each of the plurality of units;
   determine a unit to perform a preset operation mode among the plurality of units, based on the state information; and
   transmit a control signal for performing the operation mode to the unit to perform the operation mode.
Paragraph 11. The charging device of Paragraph 10, wherein the operation mode comprises an operation of transmitting a wireless signal for a unit that performs the operation mode to identify a location of the plurality of units.
Paragraph 12. The charging device of one of Paragraphs 10 and 11, wherein the 420 is configured to transmit the control signal to a unit with low cumulative usage of the second battery comprised in the state information of the second battery.
Paragraph 13. The charging device of one of Paragraphs 10 to 12, wherein the processor is configured to:
   when a unit of the plurality of units is combined with the charging device transmit the control signal to the unit combined with the charging device; and
   when two or more units of the plurality of units are combined with the charging device, transmit the control signal to the unit with the low cumulative usage of the second battery comprised in the state information of the second battery.
Paragraph 14. The charging device of one of Paragraphs 10 to 13, wherein the processor is configured to transmit the control signal to a unit different from the unit that performs the operation mode, based on a charge level of the second battery of the unit that performs the operation mode among the plurality of units and a preset threshold.
Paragraph 15. The charging device of one of Paragraphs 10 to 14, wherein the processor is configured to, when charging of the second battery is completed, transmit the control signal to the unit to perform the operation mode.
Paragraph 16. An electronic device comprising a plurality of units including a first unit and at least one second unit, wherein each of the plurality of units comprises: a battery; a processor; a communication module and a memory electrically connected to the processor and configured to store instructions executable by the processor; wherein the instructions are executed by the processor of the first unit, cause the first unit to:
   receive, from each one of the at least one second unit, state information of the battery of the respective one of the at least one second unit;
   determine a unit to perform an operation mode among the plurality of units based on the received state information and state information of the battery of the first unit; and
   control the determined unit to perform the operation mode.
Paragraph 17. The electronic device of Paragraph 16, wherein, in performing the operation mode, the instructions are executed by the processor of the determined unit, cause the determined unit to transmit, to a user terminal or an external electronic device via the communication module of the determined unit, a wireless signal to identify a location of the plurality of units.
Paragraph 18. The electronic device of one of Paragraphs 16 and 17, wherein the instructions are executed by the processor of the first unit, cause the first unit to determine, as the unit to perform the operation mode, a unit including the battery with lowest cumulative usage based on the received state information and the state information of the battery of the first unit.
Paragraph 19. The electronic device of one of Paragraphs 16 to 18, wherein the instructions are executed by the processor of the first unit, cause the first unit to:
   control another unit to perform the operation mode based on a charge level of the battery of the determined unit and a preset threshold, and
   wherein the other unit is different to the determined unit that is controlled to perform the operation mode.
Paragraph 20. An electronic device, comprising a plurality of units including a first unit and at least one second unit, wherein each of the plurality of units comprises: a battery; a communication module configured to establish a communication connection with a charging device; a processor configured to transmit state information of the battery to the charging device and a memory electrically connected to the processor and configured to store instructions executable by the processor;
   wherein the instructions are executed by the processor of the first unit, cause the first unit to:
   control the first unit to perform an operation mode based on receiving a control signal from the charging device, and
   wherein the first unit is connected to the charging device and/or the state information of the battery of the first unit being different to the state information of the battery of the at least one second unit.
Paragraph 21. The electronic device of Paragraph 20, wherein, in performing the operation mode, the instructions are executed by the processor of the first unit, cause the first unit to transmit, to a user terminal or an external electronic device via the communication module of the first unit, a wireless signal to identify a location of the plurality of units.
Paragraph 22. The electronic device of one of Paragraphs 20 and 21, wherein the battery of the first unit has lowest cumulative usage among the batteries of the plurality of units.
Paragraph 23. The electronic device of one of Paragraph 20 and 21, wherein
   when the first unit is connected to the charging device and the at least one second unit are not connected to the charging device, the control signal is received by the first unit, and
   when the first unit and one or more of the at least one second unit are connected to the charging device, the control signal is received by the first unit based on the battery of the first unit having lowest cumulative usage among the battery of the first unit and the batteries of the one or more of the at least one second unit.
Paragraph 24. The electronic device of one of Paragraphs 20 to 23, wherein the instructions are executed by the processor of a second unit of the at least one second unit, cause at least one second unit to:
   control the second unit to perform the operation mode based on receiving another control signal from the charging device, wherein the other control signal is received based on a charge level of the battery of the first unit and a preset threshold.
Paragraph 25. The electronic device of Paragraph 24, wherein the instructions are executed by the processor of the first unit, cause the first unit to:
   stop performing the operation mode based on detecting the charge level to be equal to or less than the preset threshold or receiving, from the charging device, a further control signal.
Paragraph 26. A charging device comprising:
   a power source configured to supply power to a plurality of units;
   a communication module configured to establish a communication connection with the plurality of units;
   a processor; and
   a memory electrically connected to the processor and configured to store instructions executable by the processor,
   wherein the instructions are executed by the processor, cause the charging device to:
      receive, from each one of the plurality of units, state information of a battery of the respective one of the plurality of units;
      determine a unit to perform an operation mode among the plurality of units, based on at least one of the state information or the unit being connected to the charging device; and
      transmit a control signal for performing the operation mode to the determined unit.
Paragraph 27. The charging device of Paragraph 26, wherein the instructions are executed by the processor, cause the charging device to determine, as the unit to perform the operation mode, a unit having the battery with lowest cumulative usage based on the state information.
Paragraph 28. The charging device of Paragraph 26, wherein the instructions are executed by the processor, cause the charging device to:
   when one unit of the plurality of units is connected to the charging device and the remaining unit(s) of the plurality of units are not connected to the charging device, determine, as the unit to perform the operation mode, the unit connected to the charging device; and
   when two or more units of the plurality of units are connected to the charging device, determine, as the unit to perform the operation mode, a unit, among the two or more units, having the battery with lowest cumulative usage based on the state information.
Paragraph 29. The charging device of one of Paragraphs 26 to 28, wherein the instructions are executed by the processor, cause the charging device to transmit another control signal to another unit to perform the operation mode, based on a charge level of the battery of the determined unit and a preset threshold, and
   wherein the other unit is different to the determined unit that is controlled to perform the operation mode.
Paragraph 30. The charging device of one of Paragraphs 26 to 29, wherein , the control signal is transmitted to the determined unit to perform the operation mode when charging of the battery of the determined unit or the plurality of units is completed.

The electronic device according to an embodiment disclosed herein may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

Herein, where reference is made to a component of a unit included in electronic device 300, it will be appreciated that this also supports reference to the component as being more generally included in electronic device 300 (i.e. without being necessary to specify the unit which includes the component).

It will be appreciated that, in addition to including the examples, embodiments, aspects etc. disclosed throughout the above, the present disclosure also envisages, and includes, each and every combination of the examples, embodiments, aspects etc. disclosed throughout the above. For instance, each combination of two or more of the examples disclosed herein should be considered to be included in the present disclosure. Furthermore, the present disclosure should also be seen to include examples comprising each and every combination of the various individual features disclosed herein, regardless of whether said individual features belong to the same or different examples, embodiments, aspects etc. To give an example, even without a corresponding literal disclosure, the present disclosure should be seen to comprise examples where any one or more individual features disclosed in combination with FIG. 5 are combined with any one or more individual features disclosed in combination with FIG. 7.

It should be appreciated that an embodiment of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "A and/or B, "at least one of A or B," "A, B or C,", "A, B and/or C", "at least one of A, B and C," and "at least one of A, B, or C," each of which may include any one of the items listed together in the corresponding one of the phrases, or all possible combinations thereof. Terms such as " 1^{st}," "2^{nd}," or "first" and "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 300) comprising a plurality of units (301-1, 301-2) including a first unit (301-1) and at least one second unit (301-2), wherein each of the plurality of units (301-1, 301-2) comprises:
a battery (189, 389-1, 389-2);
a processor (120, 320-1, 320-2);
a communication module (190, 390-1, 390-2); and
a memory (130, 330-1, 330-2) electrically connected to the processor (120, 320-1, 320-2) and configured to store instructions executable by the processor (120, 320-1, 320-2),
wherein the instructions are executed by the processor (120, 320-1, 320-2) of the first unit (301-1), cause the first unit (301-1) to:
receive, from each one of the at least one second unit (301-2), state information of the battery (189, 389-1, 389-2) of the respective one of the at least one second unit (301-2);
determine a unit to perform an operation mode among the plurality of units (301-1, 301-2) based on the received state information and state information of the battery (189, 389-1, 389-2) of the first unit (301-1); and
control the determined unit to perform the operation mode.

2. The electronic device (101, 300) of claim 1, wherein, in performing the operation mode, the instructions are executed by the processor (120, 320-1, 320-2) of the determined unit, cause the determined unit to transmit, to a user terminal (412) or an external electronic device (410) via the communication module (190, 390-1, 390-2) of the determined unit, a wireless signal to identify a location of the plurality of units (301-1, 301-2).

3. The electronic device (101, 300) of one of claims 1 and 2, wherein the instructions are executed by the processor (120, 320-1, 320-2) of the first unit (301-1), cause the first unit (301-1) to determine, as the unit to perform the operation mode, a unit including the battery (189, 389-1, 389-2) with lowest cumulative usage based on the received state information and the state information of the battery (189, 389-1, 389-2) of the first unit (301-1).

4. The electronic device (101, 300) of one of claims 1 to 3, wherein the instructions are executed by the processor (120, 320-1, 320-2) of the first unit (301-1), cause the first unit (301-1) to:
control another unit to perform the operation mode based on a charge level of the battery (189, 389-1, 389-2) of the determined unit and a preset threshold, and
wherein the other unit is different to the determined unit that is controlled to perform the operation mode.

5. An electronic device (101, 300), comprising a plurality of units (301-1, 301-2) including a first unit (301-1) and at least one second unit (301-2), wherein each of the plurality of units (301-1, 301-2) comprises:
a battery (189, 389-1, 389-2);
a communication module (190, 390-1, 390-2) configured to establish a communication connection with a charging device (400);
a processor (120, 320-1, 320-2) configured to transmit state information of the battery (189, 389-1, 389-2) to the charging device (400); and
a memory (130, 330-1, 330-2) electrically connected to the processor (120, 320-1, 320-2) and configured to store instructions executable by the processor (120, 320-1, 320-2),
wherein the instructions are executed by the processor (120, 320-1, 320-2) of the first unit (301-1), cause the first unit(301-1) to:
control the first unit (301-1) to perform an operation mode based on receiving a control signal from the charging device (400), and
wherein the first unit (301-1) is connected to the charging device (400) and/or the state information of the battery (189, 389-1, 389-2) of the first unit (301-1) is different to the state information of the battery (189, 389-1, 389-2) of the at least one second unit (301-2).

6. The electronic device (101, 300) of claim 5, wherein, in performing the operation mode, the instructions are executed by the processor (120, 320-1, 320-2) of the first unit (301-1), cause the first unit(301-1) to transmit, to a user terminal (412) or an external electronic device (410) via the communication module (190, 390-1, 390-2) of the first unit (301-1), a wireless signal to identify a location of the plurality of units (301-1, 301-2).

7. The electronic device (101, 300) of one of claims 5 and 6, wherein the battery (189, 389-1, 389-2) of the first unit (301-1) has lowest cumulative usage among the batteries of the plurality of units (301-1, 301-2).

8. The electronic device (101, 300) of one of claims 5 and 6, wherein
when the first unit (301-1) is connected to the charging device (400) and the at least one second unit (301-2) are not connected to the charging device (400), the control signal is received by the first unit (301-1), and
when the first unit (301-1) and one or more of the at least one second unit (301-2) are connected to the charging device (400), the control signal is received by the first unit (301-1) based on the battery (189, 389-1, 389-2) of the first unit (301-1) having lowest cumulative usage among the battery (189, 389-1, 389-2) of the first unit (301-1) and the batteries (189, 389-1, 389-2) of the one or more of the at least one second unit (301-2).

9. The electronic device (101, 300) of one of claims 5 to 8, wherein the instructions are executed by the processor (120, 320-1, 320-2) of a second unit of the at least one second unit (390-2), cause at least one second unit (390-2) to:
control the second unit (301-2) to perform the operation mode based on receiving another control signal from the charging device (400), wherein the other control signal is received based on a charge level of the battery (189, 389-1, 389-2) of the first unit (301-1) and a preset threshold.

10. The electronic device (101, 300) of claim 9, wherein the instructions are executed by the processor (120, 320-1, 320-2) of the first unit (301-1), cause the first unit(301-1) to:
stop performing the operation mode based on detecting the charge level to be equal to or less than the preset threshold or receiving, from the charging device (400), a further control signal.

11. A charging device (102, 400), comprising:
a power source (489) configured to supply power to a plurality of units (301-1, 301-2);
a communication module (390-1, 390-2) configured to establish a communication connection with the plurality of units (301-1, 301-2);
a processor (420); and
a memory (130, 330-1, 330-2) electrically connected to the processor (420) and configured to store instructions executable by the processor (420),
wherein the instructions are executed by the processor (420), cause the charging device (400) to:
receive, from each one of the plurality of units (301-1, 301-2), state information of a battery (389-1, 389-2) of the respective one of the plurality of units (301-1, 301-2) ;
determine a unit to perform an operation mode among the plurality of units (301-1, 301-2), based on at least one of the state information or the unit being connected to the charging device (102, 400); and
transmit a control signal for performing the operation mode to the determined unit.

12. The charging device (102, 400) of claim 11, wherein the instructions are executed by the processor (420), cause the charging device (102; 400) to determine, as the unit to perform the operation mode, a unit having the battery (189, 389-1, 389-2) with lowest cumulative usage based on the state information.

13. The charging device (102, 400) of claim 11, wherein wherein the instructions are executed by the processor (420), cause the charging device (102; 400) to:
when one unit of the plurality of units (301-1, 301-2) is connected to the charging device (102, 400) and the remaining unit(s) of the plurality of units (301-1, 301-2) are not connected to the charging device (102, 400), determine, as the unit to perform the operation mode, the unit connected to the charging device (400); and
when two or more units of the plurality of units (301-1, 301-2) are connected to the charging device (102, 400), determine, as the unit to perform the operation mode, a unit, among the two or more units, having the battery (189, 389-1, 389-2) with lowest cumulative usage based on the state information.

14. The charging device (102, 400) of one of claims 10 to 13, wherein wherein the instructions are executed by the processor (420), cause the charging device (102; 400) to transmit another control signal to another unit to perform the operation mode, based on a charge level of the battery (389-1, 389-2) of the determined unit and a preset threshold, and
wherein the other unit is different to the determined unit that is controlled to perform the operation mode.

15. The charging device (102, 400) of one of claims 10 to 14, wherein , the control signal is transmitted to the determined unit to perform the operation mode when charging of the battery (389-1, 389-2) of the determined unit or the plurality of units (301-1, 301-2) is completed.
